## Europäisches Patentamt

## European Patent Office

## Office européen des brevets

(19)

(11) Veröffentlichungsnummer : **0 183 966**
**B1**

(12)

# EUROPÄISCHE PATENTSCHRIFT

(45) Veröffentlichungstag der Patentschrift :
30.11.88

(21) Anmeldenummer : 85113490.8

(22) Anmeldetag : 24.10.85

(51) Int. Cl.⁴ : **H 01 M  2/02,** H 01 M  2/12,
H 01 M  6/14

(54) **Hermetisch abgedichtetes galvanisches Element mit einer Lithiumelektrode.**

(30) Priorität : 29.11.84 DE 3443454

(43) Veröffentlichungstag der Anmeldung :
11.06.86 Patentblatt 86/24

(45) Bekanntmachung des Hinweises auf die Patenterteilung : 30.11.88 Patentblatt 88/48

(84) Benannte Vertragsstaaten :
BE CH DE FR GB IT LI SE

(56) Entgegenhaltungen :
DE-A- 2 430 437
DE-A- 3 034 600
FR-A- 2 193 263
GB-A- 2 042 248
GB-A- 2 129 604
US-A- 3 285 784

(73) Patentinhaber : VARTA Batterie Aktiengesellschaft
Am Leineufer 51
D-3000 Hannover 21 (DE)

(72) Erfinder : Sauer, Hans
Pflasterwiese 7
D-6270 Idstein 9 (DE)

(74) Vertreter : Kaiser, Dieter Ralf, Dipl.-Ing.
Gundelhardtstrasse 72
D-6233 Kelkheim/Ts. (DE)

## Beschreibung

Die Erfindung betrifft ein galvanisches Element mit einer Lithiumelektrode und einem wasserfreien organischen Elektrolyten in einem hermetisch abgedichteten zylindrischen Metallgehäuse, bestehend aus einem ersten einseitig geschlossenen Zylinder und einem zweiten einseitig geschlossenen Zylinder, welche im Preßsitz ineinandergeschoben sind, wobei zwischen der Außenseite des ersten Zylinders und der Innenseite des zweiten Zylinders eine elektrische Isolierung aus Kunststoff vorhanden ist.

Durch die Einführung neuer elektrochemischer Systeme hoher Energiedichte auf der Basis hochreaktiver Anodenmaterialien wie Lithium oder Natrium und nichtwässriger Elektrolyte, mit denen Zellspannungen von ca. 3 V erreicht werden, ist es möglich geworden, die zum Betrieb eines elektrischen Geräts notwendige Versorgungsspannung mit weit weniger Zellen verfügbar zu machen als an Zellen konventioneller, wässriger Systeme mit Einzelspannungen von ca. 1,5 V hierzu erforderlich wären. Zugleich hat diese Entwicklung in stärkerem Maße zur Verkleinerung der Zellengehäuse (Miniaturisierung) beigetragen.

Besonders hohe Energiedichten werden bei Verwendung solcher Elektrolyte erreicht, bei denen das Lösungsmittel nicht nur Träger für das Elektrolytsalz sondern zugleich auch aktives, flüssiges Kathodenmaterial ist. Eine Reihe von Oxihalogeniden, unter ihnen das Thionylchlorid und das Sulfurylchlorid, besitzt diese Doppeleigenschaft.

Wegen des korrosiven Charakters der für Lithiumsysteme in Betracht kommenden Lösungsmittel-Elektrolyte und wegen ihres hohen Durchdringungsvermögens bildet der mögliche Elektrolytaustritt für die Umgebung einer solchen Zelle eine akute Gefahr. Da für das Lithium Feuchtigkeitsspuren ebenfalls schädlich sind, ist die Einhaltung einer absolut trockenen Zellatmosphäre unerläßlich.

Ein diesen Zustand absichernder hermetischer Verschluß muß andererseits einem möglichen Druckaufbau Rechnung tragen, der im Zellinnern beispielsweise durch unzulässiges Wiederaufladen oder ungewöhnliche Hitzeeinwirkung entstehen kann. Dieser Innendruck verlangt, daß z. B. Thionylchlorid- oder Sulfurylchloridzellen nach Erfahrungen (vgl. EP-A 100 487) spätestens nach Erreichen von ca. 3 400 kPa (34,6kp/cm²) entlüftet werden sollen, um ein Platzen der Zellen zu verhindern.

Eines der wesentlichen Probleme bei der Herstellung geschlossener elektrischer Hochenergiezellen liegt somit in einer zuverlässigen Abdichtung. Dazu sind verschiedene prinzipielle Lösungen vorgeschlagen worden, wobei man grundsätzlich zwischen Abdichtungen unterscheiden kann, welche eine echte Ventilfunktion besitzen, d. h. sich nach Ablassen des Überdrucks selbsttätig wieder schließen (resealable vent), und solchen, bei denen nach Eintritt des « Ereignisses » eine permanente Entlüftung zur umgebenden Atmosphäre zurückbleibt. Eine Dichtung der erstgenannten Art wird gewöhnlich durch einen in eine Belüftungsöffnung eingepaßten flachen Dichtungsgummi realisiert, der von einem federelastischen Element in seiner Schließposition gehalten und aus dieser nur vorübergehend entlassen wird, um bei einem vorbestimmten Überdruck dem Gas einen Ausweg freizugeben.

In die zweite Dichtungskategorie fällt ein Sicherheitsventil gemäß US-PS 4.329.405, bei dem eine deformierte Kugel durch Preßsitz in einer Ventilöffnung diese normalerweise flüssigkeitsdicht verschließt, durch einen unzulässig hohen Überdruck jedoch eine geringe Lageveränderung gegenüber dem Öffnungsrand erfährt, derart, daß die Dichtigkeit für immer aufgehoben ist.

In einer Rundzelle gemäß EP-A 36.092 mündet ein Gaskanal in den Raum unterhalb des Deckels, wobei dem Deckel in diesem Bereich eine feste Verbördelung mit der Umfangskante des Behälters und der zwischenliegenden Kunststoffdichtung fehlt. Ein Überdruck läßt den Deckel daher über dem Gaskanal hochkippen und Gas entweicht zwischen der Behälterverkleidung und der Polkappe, die ohne zwischenliegendes Dichtungsmaterial verbördelt sind.

Bei der Verwendung von Glas/Matall-Dichtungen, wie sie beispielsweise in der US-A 4.048.401 oder EP-A 35 074 offenbart sind, spielen in erster Linie die Aggressivität der Inhaltsstoffe von Lithiumzellen und der Wunsch nach guter Lagerfähigkeit eine Rolle.

Als Mittel gegen die Gefahr des Berstens der Zelle sind auch Sollbruchstellen bekannt. So ist z. B. bei der Dilatationsdichtung gemäß DEA 2 728 753 das Zellengehäuse mit einem duktilen metallischen Teilstück ausgestattet, welches gelocht ist, wobei das Loch wiederum mit einem nichtnachgiebigen metallischen Werkstück überlappend abgedeckt ist und ein Glaslot beide Stücke hermetisch miteinander verbindet. Unter hohem Elektrolytdampfdruck wölbt sich das duktile Teilstück nach außen, und durch die erzeugte Scherkraft bricht die Glasschicht oder die Haftung zwischen dieser Schicht und einem der beiden Metallstücke reißt ab.

Schließlich sind Schmelzdichtungen, z. B. aus einer leichtschmelzenden Bi-Sn-Legierung gemäß US-A 3.855.006, bekannt, die sich bei unzulässig hoher Innentemperatur vom Rand der Belüftungsöffnung ablösen oder es wird unter solchen Temperaturbedingungen eine Entladung der Zelle mittels eines Temperaturschalters nach US-A 4.209.571 verhindert.

Alle diese Abdichtungen sind aufwendig, da sie aus mehreren Teilen bestehen und die verfügbare Kapazität verringern, oder die Abblasdrucke lassen sich wie bei Sollbruchstellen nicht zuverlässig einstellen, was auch für bekannte Gehäusekonstruktionen gemäß der GB-A 2 129 604 oder der US-A 3 285 784 gilt.

Der Erfindung liegt die Aufgabe zugrunde, für eine spezielle Gehäusekonstruktion nach dem eingangs formulierten Gattungsbegriff, die der DE-A 3 034 600 zu entnehmen ist und sich bei der Herstellung von Lithium-Zellen bereits bewährt hat, ein geeignetes Dichtungssystem anzugeben, welches nicht nur einen hermetischen Verschluß gewährleistet, sondern außerdem bei vorschriftswidriger Betriebsweise oder fehlerhafter Ausführung der Zelle einen entstandenen kritischen Innendruck ohne die Gefahr eines explosionsartigen Berstens des Zellenbehälters freigibt.

Die Aufgabe wird durch die im kennzeichnenden Teil des Anspruchs 1 angegebenen Maßnahmen gelöst.

Die Kunststoffkappe sitzt der ersten zylindrischen Hülse an ihrem offenen Ende auf und umgreift deren Außenseite wenigstens so weit, daß die spätere Überlappungszone der beiden Zylinder abgedeckt ist. Dabei gewährleistet sie auch, daß die Hülsen, nachdem das Becherteil unter sorgfältigem Ausschluß von Luftfeuchtigkeit montagefertig gefüllt und das Deckelteil mit einem in der Zylinderachse liegenden Drahtableiter verschweißt worden ist, nur unter Kraftaufwand aufeinandergeschoben werden können, wobei sich ein fester Preßsitz der Teile mit hermetischer Abdichtung der Zelle nach außen ergibt.

Damit noch vor dem Eintreten einer Explosion der Zelle infolge unsachgemäßer Behandlung eine Druckentlastung stattfindet, ist erfindungsgemäß das Kunststoffmaterial der Kappe so ausgewählt, daß es spätestens bei 150 °C erweicht. Wegen des Verlustes der Haftreibung schieben die Hülsen darauf bereits bei geringem Innendruck voneinander ab.

Daher kann die Schmelztemperatur des Lithiums (180 °C) in der Zelle nicht erreicht werden. Außerdem läßt sich erreichen, daß bei der gleichen Zelle der Deckel bei einem Innendruck von ca. 30 bar abschiebt, so daß eine Explosion bei unzulässiger Ladung der Lithiumzelle verhindert wird.

Ein und dieselbe Zelle ist somit imstande, auf voneinander unabhängige Höchstwerte des Innendrucks und der Temperatur anzusprechen und zu öffnen.

Geeignete Materialien für die Kappe umfassen Polypropylen, Polyäthylen-Polypropylen-Copolymerisate sowie fluorierte Copolymerisate des Äthylens und Propylens, ferner Nylon, Polyamid, Polyacryl, Polycarbonat und PTFE. Bei der zweckdienlichen Auswahl ist aber nicht nur das thermische Verhalten zu berücksichtigen, sondern es muß auch die Beständigkeit gegen das jeweilige Elektrolytlösungsmittel sowie das Kriterium eines möglichst geringen Stoffaustausches von außen nach innen (z. B. Feuchtigkeit) bzw. von innen nach außen (z. B. Äther) in Betracht gezogen werden.

Um die Druckentlastung zu unterstützen, können erfindungsgemäß in der Wand der Becherhülse im Bereich der Überlappung ein oder mehrere Ventillöcher von z. B. 0,1 mm Durchmesser vorgesehen sein, die zweckmäßig mit dem Laserstrahl gebohrt werden. Das unterste Loch sollte etwas oberhalb der unteren Überlappungsgrenze liegen. Ist nun der vorbestimmte « Ansprechdruck » erreicht, gibt die abgleitende Deckelhülse zuerst dieses, dann nach und nach gegebenenfalls weitere Ventillöcher frei, so daß das überschüssige Gas, eventuell auch eine kleine Elektrolytmenge, die isolierende Kunststoffzwischenlage unterwandern kann, bis es an ihrem Ende entweicht. Hierbei findet ein Druckausgleich « nach Bedarf » statt. Die Dilatationsbewegung kommt u. U. zum Stillstand. Bei Vorhandensein einer größeren Anzahl Ventillöcher in der Hülsenwand ist es besonders günstig, wenn sie sich in der Weise verteilen, daß ihre Häufigkeit mit wachsendem Abstand von der unteren Überlappungsgrenze zunimmt.

Figur 1 zeigt ein explosionssicheres galvanisches Lithiumelement gemäß der Erfindung im Aufriß.

Figur 2 zeigt ein Deckelhülse des Lithiumelements in einer speziellen Ausführung.

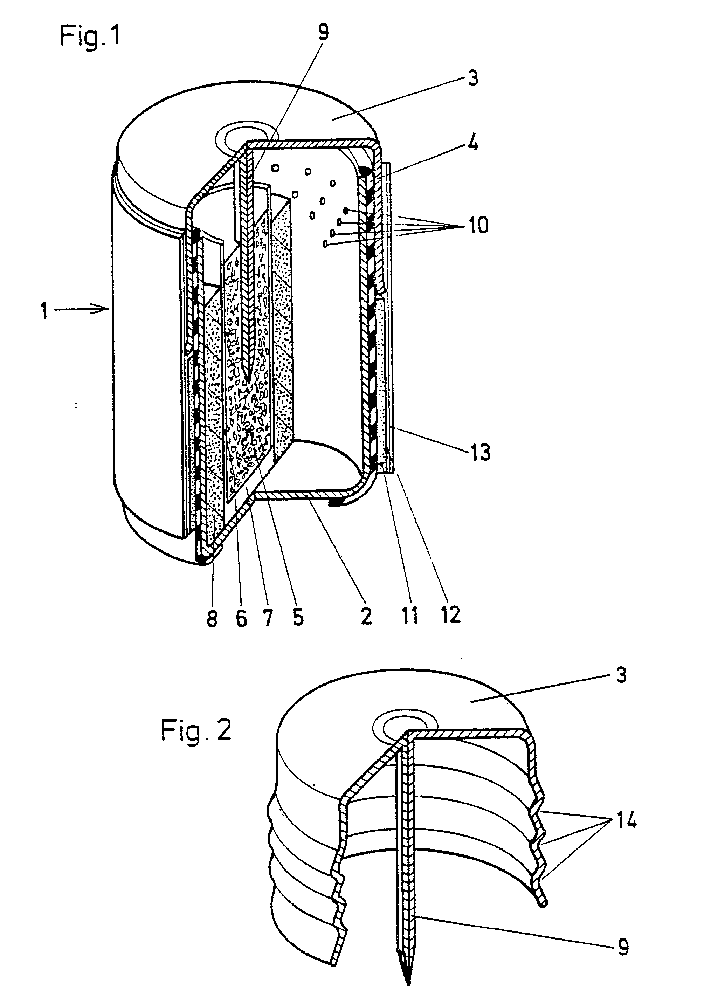

Nach Figur 1 wird das Gehäuse der zylindrischen Zelle 1 gebildet von einem ersten einseitig geschlossenen Zylinder 2 und einem zweiten einseitig geschlossenen Zylinder 3, die unter Zwischenlage eines den ersten Zylinder ummantelnden Kunststoffkappe 4 derart im Preßsitz aufeinandergeschoben sind, daß sie nur durch einen vorbestimmten ungewöhnlich hohen Innendruck voneinander lösbar sind. Der erste Zylinder enthält als Becher in konzentrischer Anordnung die Lithiumelektrode 5, den Separator 6 mit isolierender Bodenplatte 7 sowie das in Form eines Ringzylinders angeordnete Kathodenmaterial 8, beispielsweise $CrO_x$. Der Elektrolyt, beispielsweise bestehend aus einer Lösung von $LiClO_4$ in einem Gemisch von Propylencarbonat und Dimethoxiäthan, sei weitgehend vom Separator und vom porösen Kathodenmaterial absorbiert. An der Innenseite des Zylinders 3 ist der nagelförmige negative Ableiter 9 angepunktet.

An der in der Darstellung freigelegten Wand des ersten Zylinders sind mehrere Ventillöcher 10 in einer vorzugsweisen Verteilung sichtbar.

Nachdem die Zelle geschlossen worden ist, wird das Gehäuse als Ganzes durch ein Kalibrierungswerkzeug gezogen, wobei sich sein Durchmesser um ein geringes reduziert. Dadurch wird zumindest auf die Deckelhülse eine Radialpressung ausgeübt, welche die feste, hermetische Umschließung der Becherhülse gewährleistet.

Eine auf einige schmale Zonen konzentrierte und dadurch besonders intensive Radialpressung läßt sich erreichen, wenn man der Deckelhülse die in der Figur 2 dargestellte Form gibt, indem man dem Hülsenmantel noch wor der Montage eine entsprechende Zahl umlaufender Sicken 14 einprägt Besonders vorteilhaft ist eine Sickenprägung, die dem Hülsenmantel ein « Sägezahnprofil » mit einer das Verschließen begünstigenden « Gleitrichtung », das Aufschieben hingegen erschwerenden « Sperrichtung » verleiht. Beim Kalibrierungsvorgang, dem die mit einem solchen Deckel verschlossene Zelle genauso wie die mit einem glatten Deckel versehene Zelle unterworfen wird, findet eine weitgehende Einebnung des Sickenprofils statt.

Zur Komplettierung der Zelle ist dann nach Figur 1 eine Kaschierung 11 vorgesehen, durch welche der Überstand des zweiten Zylinders (Deckel) über den ersten ggfls. wollständig ausgeglichen wird.

Als Finishing erhält das Gehäuse eine Verkleidung durch eine Kunststoffolie 12 mit einer abdeckenden Aluminiumfolie 13 für die Etikettierung. Die einzelnen Folien können auch durch eine metallkaschierte Kunststoffolie ersetzt werden. Die Folienverkleidung trägt zur Verlängerung des Kriechweges und zur Herabsetzung der Permeation bei.

**Patentansprüche**

1. Galvanisches Element mit einer Lithiumelektrode und einem wasserfreien Elektrolyten in einem hermetisch abgedichteten zylindrischen Metallgehäuse, bestehend aus einem ersten einseitig geschlossenen Zylinder und einem zweiten einseitig geschlossenen Zylinder, welche im Preßsitz ineinandergeschoben sind, wobei zwischen der Außenseite des ersten Zylinders und der Innenseite des zweiten Zylinders eine elektrische Isolierung aus Kunststoff vorhanden ist, dadurch gekennzeichnet, daß die Isolierung von einer offenen Kunststoffkappe in Form eines Spritzteiles gebildet ist, welche dem ersten Zylinder an seinem offenen Ende aufsitzt und seine Außenseite soweit umgreift, daß die Überlappungszone zwischen den Zylindern abgedeckt ist, und daß das Kunststoffmaterial mit der Maßgabe ausgewählt ist, daß es spätestens bei 150 °C erweicht, woraufhin die Zylinder voneinander abschiebbar sind.

2. Galvanisches Element nach Anspruch 1, dadurch gekennzeichnet, daß in der Wandung des ersten Zylinders im Bereich der Überlappung durch den zweiten Zylinder ein oder mehrere Ventillöcher (10) vorhanden sind.

3. Galvanisches Element nach Anspruch 2, dadurch gekennzeichnet, daß die Ventillöcher in verschiedenen Abständen von der Untergrenze des Überlappungsbereiches angeordnet und in einer mit dem Abstand wachsenden Häufigkeit verteilt sind.

**Claims**

1. Galvanic cell having a lithium electrode and an anhydrous electrolyte in a hermetically sealed cylindrical metal housing consisting of a first cylinder closed at one end and a second cylinder closed at one end which are pushed into each other as a drive fit, a plastic electrical insulation being present between the outside of the first cylinder and the inside of the second cylinder, characterized in that the insulation is formed from an open plastic cap in the form of an injection moulded part, which cap rests on the first cylinder at its open end and encloses its outside to such an extent that the overlap zone between the cylinders is covered, and in that the plastic material is selected with the proviso that it softens at the latest at 150 °C, whereafter the cylinders can be pushed apart.

2. Galvanic cell according to Claim 1, characterized in that one or more vent holes (10) are present in the wall of the first cylinder in the region of overlapping by the second cylinder.

3. Galvanic cell according to Claim 2, characterized in that the vent holes are disposed at various distances from the lower boundary of the overlap region and are distributed with a frequency which increases with the distance.

**Revendications**

1. Elément galvanique avec une électrode de lithium et un électrolyte anhydre dans un boîtier métallique cylindrique hermétiquement étanche, constitué par un premier cylindre fermé d'un côté et par un second cylindre fermé d'un côté, qui sont emboîtés l'un dans l'autre par pressage, une isolation électrique en matière plastique étant prévue entre la face externe du premier cylindre et la face interne du second cylindre, élément galvanique caractérisé en ce que l'isolation est constituée par un capot ouvert en matière plastique sous la forme d'une pièce moulée par injection, qui est placée sur le premier cylindre à son extrémité ouverte et qui enserre sa face interne dans une mesure telle que la zone de recouvrement entre les cylindres est recouverte et que la matière plastique est choisie de façon qu'elle se ramollisse au plus tard à 150 °C, après quoi les cylindres peuvent être déboîtés l'un de l'autre.

2. Elément galvanique selon la revendication 1, caractérisé en ce qu'un ou plusieurs trous de ventilation (10) sont prévus dans la paroi du premier cylindre dans la zone du recouvrement par le deuxième cylindre.

3. Elément galvanique selon la revendication 2, caractérisé en ce que les trous de ventilation sont disposés à différentes distances de la limite inférieure de la zone de recouvrement et sont répartis selon une fréquence croissant avec cette distance.

Fig.1

Fig. 2